# EUROPEAN PATENT APPLICATION

(11) **EP 4 098 118 A1**
(43) Date of publication of application: **07.12.2022**
(21) Application number: 22174325.5
(22) Date of filing: 19.05.2022
(51) Int. Cl.: A01M 7/00

(54) **SPRAYING MACHINE**

(30) Priority: 31.05.2021 JP 2021091532
(71) Applicant: Yanmar Holdings Co., Ltd., Osaka-shi, Osaka (JP)
(72) Inventor: UKAI, Hirofumi, Osaka-shi, Osaka (JP); IBE, Toshihiko, Osaka-shi, Osaka (JP); HIRASAWA, Kazuaki, Osaka-shi, Osaka (JP)
(74) Representative: Novagraaf International SA

(57) **Abstract**

[Problem] To provide a spraying machine that can easily suppress occurrence of unevenness in the spraying amount of a spraying material.

[Solution] A spraying machine 1 includes a machine body 10, a support frame 3, and a spraying portion 41. The support frame 3 includes a horizontal frame 3C having a length along a left-right direction D2, and a pair of vertical frames 3L and 3R each having a length along an up-down direction D1, and protruding downward from both ends of the horizontal frame 3C. The spraying portion 41 is supported by the support frame 3, and sprays a spraying material. The support frame 3 is supported by the machine body 10 to be rotatable around a rotation axis Axl passing through a fulcrum portion 31 provided on the horizontal frame 3C and extending along a front-back direction D3, while maintaining a relative positional relationship between the pair of vertical frames 3L and 3R, and the horizontal frame 3C.

## Description

### TECHNICAL FIELD

The present invention relates to a spraying machine for spraying a spraying material.

### BACKGROUND ART

As a related art, a work machine (agricultural vehicle) provided with a crawler traveling unit, a left vehicle body, a right vehicle body, an engine, and a spraying unit (chemical injection unit) is known (see, for example, Patent Document 1). In the work machine according to the related art, the crawler traveling units are disposed as a left and right pair, and travel with a plant being an object to be sprayed held in a left-right direction. The left vehicle body is mainly supported by the left crawler traveling unit. The right vehicle body is mainly supported by the right crawler traveling unit. The engine is disposed on the side of the left vehicle body.

In the work machine according to the related art, a spraying unit is provided for each of the left vehicle body and the right vehicle body. Each spraying unit sprays a chemical agent on both of the right side and the left side of the machine. This allows the work machine according to the related art to simultaneously spray a chemical agent to plants passing through a space between the pair of left and right crawler traveling units, plants located on the left side of the work machine, and plants located on the right side of the work machine.

### PRIOR ART DOCUMENT

### PATENT DOCUMENT

Patent Document 1: Japanese Patent Application Publication No. 2020-152285

### SUMMARY OF INVENTION

### TECHNICAL PROBLEM

In the configuration of the above related art, the left vehicle body and the right vehicle body may tilt to the left or right, in a case where, for example, the ground has a slope. In this case, a distance from the spraying unit differs between an upper part and a lower part of a plant that grows vertically straight from the ground. This may cause unevenness in the spraying amount of a spraying material.

An object of the present invention is to provide a spraying machine that can easily suppress occurrence of unevenness in the spraying amount of a spraying material.

### SOLUTION TO PROBLEM

A spraying machine according to one aspect of the present invention includes a machine body, a support frame, and a spraying unit. The support frame includes a horizontal frame having a length along a left-right direction, and a pair of vertical frames each having a length along an up-down direction and protruding downward from both ends of the horizontal frame. The spraying unit is supported by the support frame, and sprays a spraying material. The support frame is supported by the machine body to be rotatable around a rotation axis passing through a fulcrum portion provided on the horizontal frame and extending along a front-back direction, while maintaining a relative positional relationship between the pair of vertical frames and the horizontal frame.

### ADVANTAGEOUS EFFECTS OF INVENTION

According to the present invention, it is possible to provide a spraying machine that can easily suppress occurrence of unevenness in the spraying amount of a spraying material.

### BRIEF DESCRIPTION OF DRAWINGS

FIG. 1 is an external view of a spraying machine according to a first embodiment when viewed from the front left side.
FIG. 2 is an external view of a back surface of the spraying machine according to the first embodiment when viewed from the back side.
FIG. 3 is a diagram illustrating an example of crop rows for which the spraying machine according to the first embodiment is used.
FIG. 4 is a schematic diagram illustrating an overall configuration of an autonomous driving system incorporated with the spraying machine according to the first embodiment.
FIG. 5 is an external view of a left surface of the spraying machine according to the first embodiment when viewed from the left side.
FIG. 6 is an external view of a right surface of the spraying machine according to the first embodiment when viewed from the right side.
FIG. 7 is an external view of an upper surface of the spraying machine according to the first embodiment when viewed from above.
FIG. 8 is an external view of the back surface of the spraying machine according to the first embodiment when viewed from the back side.
FIG. 9 is a schematic diagram illustrating a state of the spraying machine according to the first embodiment when viewed obliquely from behind.
FIG. 10 is a cross-sectional view of a rear portion of the spraying machine according to the first embodiment with respect to a vertical frame.
FIG. 11 is an external view of the back surface of the spraying machine according to the first embodiment when viewed from the back side when the spraying machine is traveling on a slope with a transverse inclination.
FIG. 12 is an external view of a right surface of a spraying machine according to a second embodiment when viewed from the right side.
FIG. 13 is a schematic diagram of essential parts of a spraying machine according to a third embodiment when viewed obliquely from behind.

### DESCRIPTION OF EMBODIMENTS

In the following, embodiments according to the present invention are described with reference to the accompanying drawings. The following embodiments are an example embodying the present invention, and do not limit the technical scope of the present invention.

### (First Embodiment)

### [1] Overall Configuration

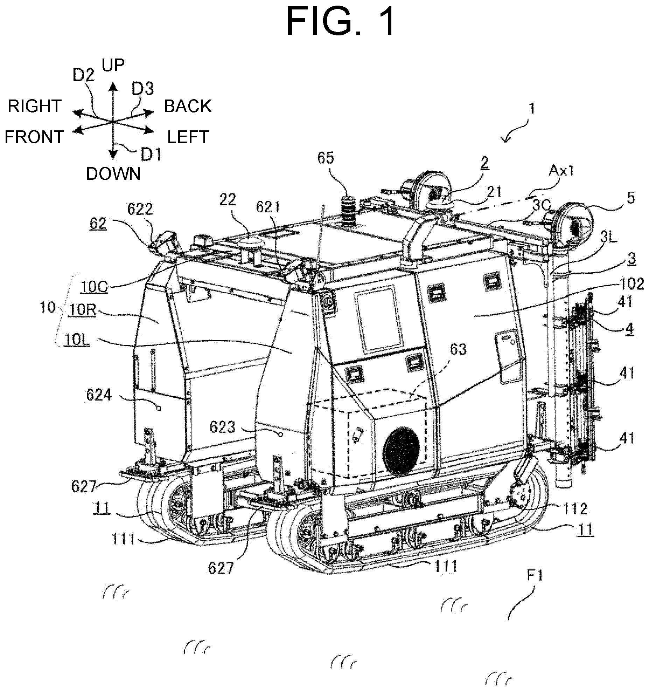

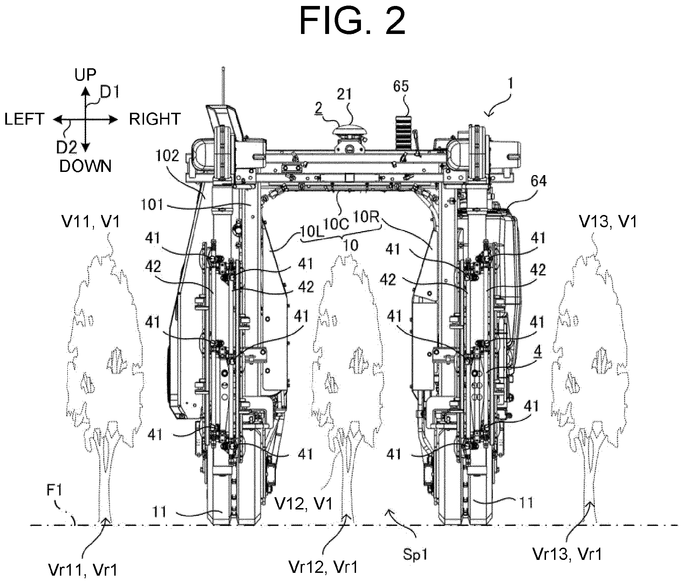

First, an overall configuration of a spraying machine 1 according to the present embodiment is described with reference to FIGS. 1 to 4. In the present embodiment, the spraying machine 1 performs a spraying work of spraying a spraying material such as, for example, a chemical solution, water, or a fertilizer to a crop V1 (see FIG. 2) being grown in a field F1. The spraying machine 1 is an example of a "work machine" that performs various works within a work area such as the field F1.

In other words, the spraying machine 1 is a work machine capable of performing, as a work, a spraying work of spraying a spraying material such as, for example, a chemical solution, water or a fertilizer. A "work machine" according to the present disclosure includes, in addition to a spraying machine, work vehicles such as, for example, tractors, rice transplanters, sprayers, seeders, transplanters, and combine harvesters. In other words, a work machine includes work vehicles. A work machine is not limited to "vehicles", and may be a work flying object such as, for example, drones or multicopters for spraying a chemical solution, water, a fertilizer, or the like. Furthermore, a "work machine" according to the present disclosure is not limited to agricultural machines (farm machinery), but may be, for example, construction machines (construction machinery), and the like.

A "field" according to the present disclosure is an example of a work area where the spraying machine 1, which is a work machine, performs various works such as, for example, a spraying work while moving, and includes orchards, pastures, rice fields, fields, and the like where agricultural products are grown. In this case, the crop V1 to be grown in the field F1 is an agricultural product. Furthermore, when planting trees are grown in a planting field, the planting field becomes the field F1, and when trees, which are processed into wood, are grown in a forest as in forestry, the forest becomes the field F1. In this case, the crop V1 to be grown in the field F1 is planting trees, trees, or the like. However, the work area where the work machine performs a work is not limited to the field F1, but may be other than the field F1. For example, in a case where the work machine is a construction machine, a site where the construction machine performs a work becomes a work area.

In the present embodiment, as an example, it is assumed that the spraying machine 1 is a vehicle that sprays a chemical solution to the crop V1 being grown in the field F1, while moving the field F1, which is an orchard such as a vineyard or an apple orchard. In this case, the chemical solution is an example of a spraying material. Also, the crop V1 is an example of an object to be sprayed to which the spraying material (chemical solution) is sprayed, and, for example, is a grape fruit tree. The crop V1 being an object to be sprayed is also an example of a work object for which a work by the spraying machine 1 as a work machine is performed. The "chemical solution" as a spraying material herein is an agricultural chemical used for efficiency of agriculture, preservation of crops, or the like, and includes herbicides, fungicides, mold inhibitors, insecticides, weed killers, rodenticides, growth promoters and germination inhibitors for plants V1, and the like.

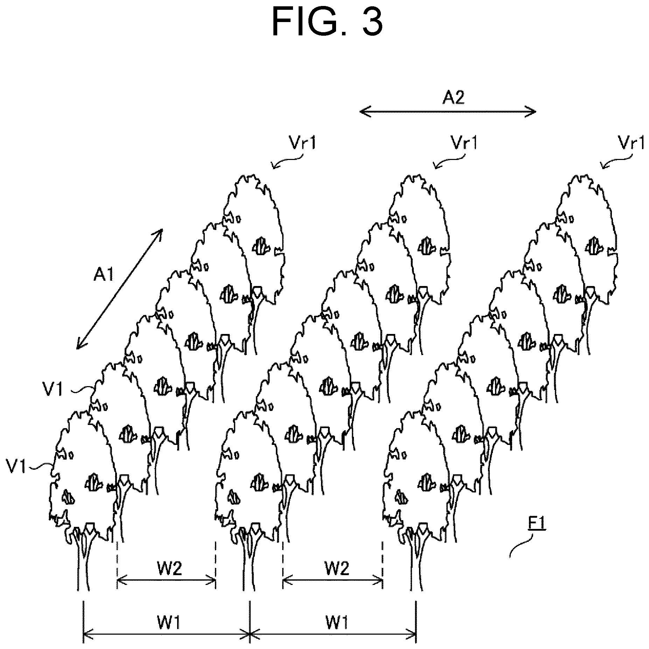

The crop V1 is disposed in a plurality of rows at a predetermined interval in the field F1. Specifically, as illustrated in FIG. 3, a plurality of crops V1 are planted in a straight row in a longitudinal direction A1 in a plan view. The plurality of crops V1 aligned in a straight row in the longitudinal direction A1 constitute a crop row Vr1. FIG. 3 illustrates three crop rows Vr1 each including six crops V1 aligned in the longitudinal direction A1. Each crop row Vr1 is disposed at a predetermined pitch W1 in a width direction A2. Thus, a work passage having a width W2 (<W1), which corresponds to an interval between the crop rows Vr1, and extending along the longitudinal direction A1 is formed between the adjacent crop rows Vr1. The spraying machine 1 sprays a spraying material (chemical solution) to the crops V1, while moving (traveling) in the longitudinal direction A1 through the work passage.

As will be described later in detail, the spraying machine 1 traveling in the field F1 has a gantry-shaped machine body 10. In other words, the machine body 10 includes a first block 10L and a second block 10R disposed side by side in a left-right direction D2, and a connecting portion 10C that connects an upper end of the first block 10L and an upper end of the second block 10R. Thus, the machine body 10 has a gantry shape in which a left portion, a right portion, and an upper portion of a space Sp1 are surrounded by the first block 10L, the second block 10R, and the connecting portion 10C. In other words, the space Sp1 opened in a front-back direction D3 is formed inside the machine body 10.

As illustrated in FIG. 2, the spraying machine 1 can spray a spraying material (chemical solution) to a crop V1 of one crop row Vr1, and a crop V1 of a crop row Vr1 adjacent to the one crop row Vr1, while traveling in a posture that the gantry-shaped machine body 10 straddles the one crop row Vr1. In other words, the spraying machine 1 can travel in such a way that a crop V1 being an object to be sprayed (work object) is allowed to pass through the space Sp1 inside of the gantry-shaped machine body 10. In other words, as illustrated in FIG. 2, in a case where there are three crop rows Vr11, Vr12, and Vr13 aligned in the left-right direction D2, the spraying machine 1 can travel in a state that the machine body 10 straddles any crop row Vr1 among these three crop rows Vr11, Vr12, and Vr13.

Herein, when it is assumed that the machine body 10 straddles the crop row Vr12 at the middle, the first block 10L travels through a work passage between the leftmost crop row Vr11 and the crop row Vr12, and the second block 10R travels through a work passage between the rightmost crop row Vr13 and the crop row Vr12. Then, the spraying machine 1 can spray a spraying material (chemical solution) simultaneously to a crop V11 at the crop row Vr11, a crop V12 at the crop row Vr12, and a crop V13 at the crop row Vr13. In this way, the spraying machine 1 according to the present embodiment can simultaneously spray a spraying material (chemical solution) to an object to be sprayed (crops V1) of three rows while traveling. Therefore, as compared to a configuration of spraying each row at a time, efficiency of a spraying work is good.

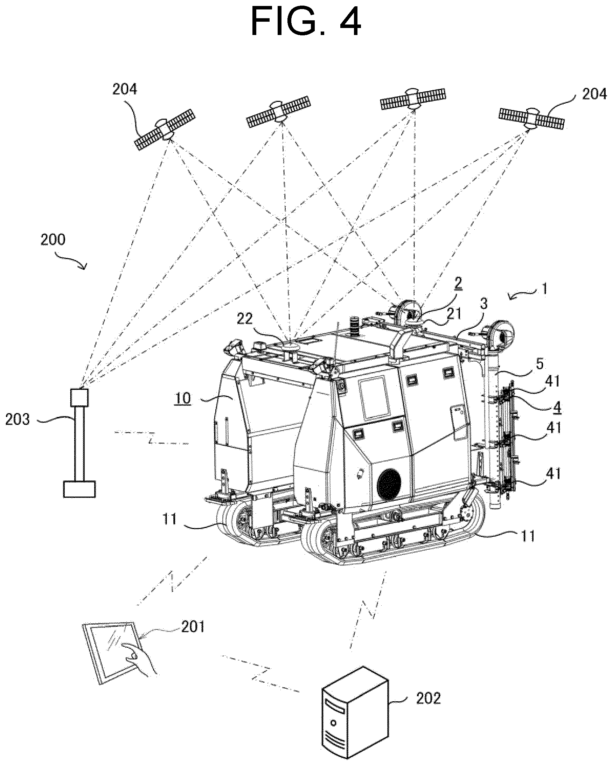

Furthermore, as an example in the present embodiment, the spraying machine 1 is an unmanned machine that is operated by autonomous driving, in place of being operated by a person (operator) (including remote control). Therefore, as illustrated in FIG. 4, the spraying machine 1 constitutes an autonomous driving system 200 together with an operation terminal 201, a server 202, a base station 203, a satellite 204, and the like. In other words, the autonomous driving system 200 includes the spraying machine 1, the operation terminal 201, the server 202, the base station 203, and the satellite 204. However, at least one of the operation terminal 201, the server 202, the base station 203, and the satellite 204 may not be included in components of the autonomous driving system 200. For example, the autonomous driving system 200 may not include the satellite 204.

The spraying machine 1, the operation terminal 201, and the server 202 are communicable with one another. The term "communicable" in the present disclosure means that information can be transmitted and received directly or indirectly through a communication network (network), a repeater, or the like, by an appropriate communication method such as wired communication or wireless communication (communication using a radio wave or light as a medium). For example, the spraying machine 1 and the operation terminal 201 are communicable via the Internet, a local area network (LAN), a wide area network (WAN), a public telephone line, a mobile phone network, a packet network, a wireless LAN, or other means. Further, each of the spraying machine 1 and the operation terminal 201, and the server 202 are also communicable via the Internet or the like.

The satellite 204 is a positioning satellite that constitutes a satellite positioning system such as a global navigation satellite system (GNSS), and transmits a GNSS signal (satellite signal). The base station 203 is a reference point (reference station) that constitutes a satellite positioning system. The base station 203 transmits, to the spraying machine 1, correction information for computing a current position and the like of the spraying machine 1.

The spraying machine 1 according to the present embodiment is provided with a positioning device 2 that detects a current position (such as a latitude, a longitude, and an altitude), a current orientation, and the like of the machine body 10. The positioning device 2 performs positioning processing of determining (computing) a current position, a current orientation, and the like of the machine body 10 by using a GNSS signal to be transmitted from the satellite 204. The positioning device 2 adopts a relatively high-precision positioning method such as, for example, real time kinematic (RTK) positioning in which positioning is performed based on positioning information (such as a GNSS signal) to be received by two receivers (the base station 203 and an antenna 21), and correction information to be generated by the base station 203.

The operation terminal 201 is an information processing device, such as, for example, a tablet terminal or a smartphone. The operation terminal 201 includes a display unit such as a liquid crystal display or an organic EL display that displays various pieces of information, and an operation unit such as a touch panel that accepts an operation, a mouse, or a keyboard. The operator can operate the operation unit, on an operation screen to be displayed on the display unit, and perform an operation of registering various pieces of information. Further, the operator can also operate the operation unit, and instruct the spraying machine 1 to start a work, stop traveling, and the like.

The server 202 is an information processing device such as a server device. The server 202 transmits, to the spraying machine 1, information such as a target route along which the spraying machine 1 automatically travels.

The spraying machine 1 can automatically travel (autonomously travel) along a predetermined target route. For example, the spraying machine 1 automatically travels along a target route including a plurality of work routes and a travel route from a work start position to a work end position. The plurality of work routes are linear routes along each of which the spraying machine 1 performs a work (spraying work) to the crop V1, which is a work object (object to be sprayed), and the travel route is a route along which the spraying machine 1 moves between the crop rows Vr1 without performing a spraying work, and may include a turning route and a straight route.

In addition, the spraying machine 1 automatically travels in a predetermined order of rows. In the example in FIG. 2, the spraying machine 1 travels while straddling the crop row Vr11, travels while straddling the crop row Vr12, and then travels while straddling the crop row Vr13. In this way, the spraying machine 1 automatically travels according to a predetermined order of crop rows Vr1. The spraying machine 1 may travel every other row, or may travel every other predetermined number of rows in the order of arrangement of crop rows V1.

For convenience of explanation, in the present embodiment, as illustrated in FIG. 1, a vertical direction in a state that the spraying machine 1 is ready for use is defined as the up-down direction D1. Furthermore, the left-right direction D2 and the front-back direction D3 are defined with respect to a direction viewed from a center point of the spraying machine 1 in a plan view, as a reference. In other words, a traveling direction of the spraying machine 1 when the spraying machine 1 is moving forward is a front side in the front-back direction D3, and a traveling direction of the spraying machine 1 when the spraying machine 1 is moving backward is a back side in the front-back direction D3. However, these directions are not intended to limit the direction of use (direction in use) of the spraying machine 1.

In addition, the term "parallel" in the present disclosure includes, in addition to a case where two straight lines on one plane do not intersect no matter how far they are extended, in other words, a case where an angle between the two straight lines is strictly 0 degree (or 180 degrees), a case where an angle between the two straight lines lies within an error range of about several degrees (e.g. less than 10 degrees) with respect to 0 degree. Likewise, the term "orthogonal" in the present disclosure means, in addition to a case where an angle at which the two straight lines intersect is exactly 90 degrees, a case where an angle between the two straight lines lies within an error range of about several degrees (e.g. less than 10 degrees) with respect to 90 degrees.

### [2] Details of Spraying Machine

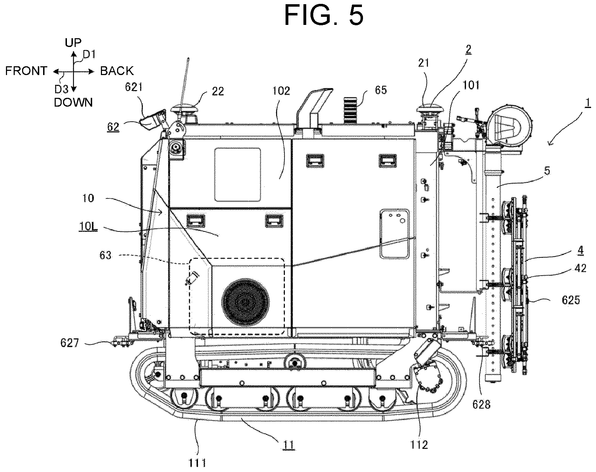

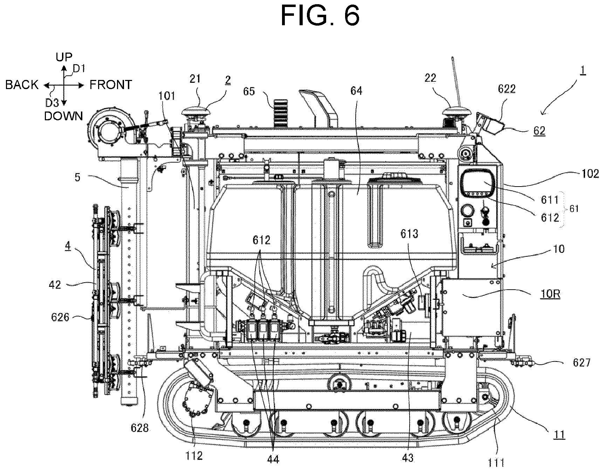

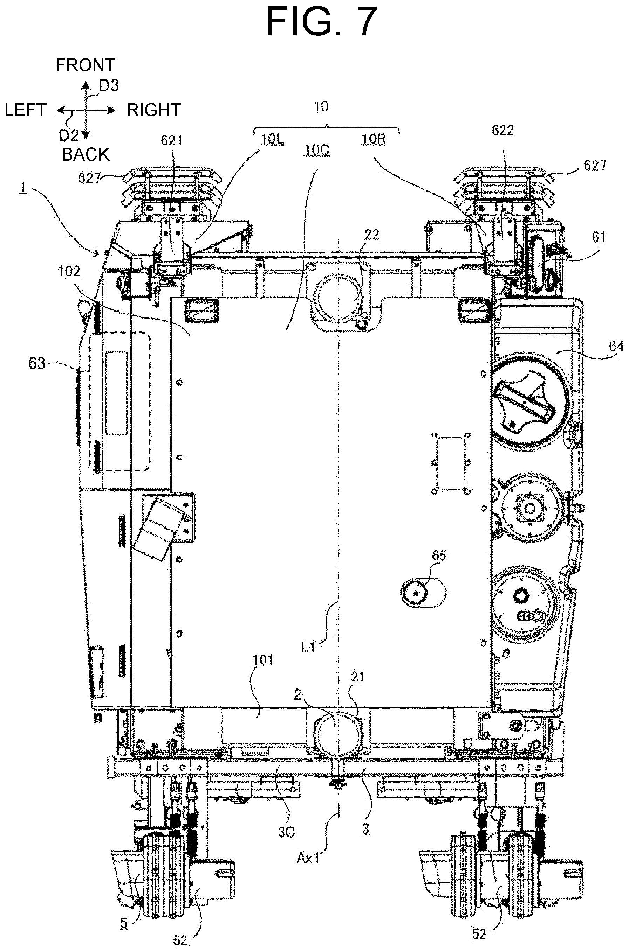

Next, a configuration of the spraying machine 1 is described in more detail with reference to FIGS. 1, 2, 5, 6, and 7. FIG. 1 is an external view of the spraying machine 1 when viewed from the front left side, and FIG. 2 is an external view of a back surface of the spraying machine 1 when viewed from the back side (rear side). FIG. 5 is an external view of a left surface of the spraying machine 1 when viewed from the left side, FIG. 6 is an external view of a right surface of the spraying machine 1 when viewed from the right side, and FIG. 7 is an external view of an upper surface of the spraying machine 1 when viewed from above.

The spraying machine 1 includes the machine body 10, the positioning device 2, a support frame 3, and a spraying device 4. In the present embodiment, the spraying machine 1 further includes an airflow generation unit 5, a user interface 61 (see FIG. 6), an obstacle detection device 62, a power source 63, a tank 64, an indicator 65, and the like. The spraying machine 1 further includes a control device, a communication terminal, a fuel tank, a battery, and the like. In the present embodiment, a structural member of the spraying machine 1, such as the machine body 10 and the support frame 3, is basically made of metal, and a material is selected according to a required strength, weather resistance, and the like. However, the structural member of the spraying machine 1 is not limited to a member made of metal, and resin, wood, or the like, for example, may be used as necessary.

The machine body 10 is a main body of the spraying machine 1, and most of the components of the spraying machine 1 such as the positioning device 2 and the support frame 3 are supported by the machine body 10. The machine body 10 includes a frame 101 (see FIG. 2), and a cover 102. The frame 101 is a member that constitutes a framework of the machine body 10, and supports a heavy object such as, for example, the power source 63 and the tank 64. The cover 102 is a member that constitutes an outer wall of the machine body 10, and is mounted on the frame 101 in such a way as to cover the frame 101, and at least some members mounted on the frame 101. The frame 101 is not covered by the cover 102 on a rear surface (back surface) and a part of a right surface of the machine body 10, and the frame 101 is exposed thereat. The cover 102 is divided into a plurality of portions, and these plurality of portions are formed to be individually detachable from the frame 101. For example, only a portion of the cover 102, which is associated with some devices (members) such as, for example, the power source 63, is detachable. Thus, it is possible to expose some devices (members) such as the power source 63.

As described above, the machine body 10 includes the first block 10L and the second block 10R disposed side by side in the left-right direction D2. The first block 10L and the second block 10R face each other in the left-right direction D2 with a gap equal to or more than a certain value. In the present embodiment, as an example, the first block 10L is located on the left side, and the second block 10R is located on the right side. Therefore, a left portion of the machine body 10 is constituted of the first block 10L, and a right portion of the machine body 10 is constituted of the second block 10R. The machine body 10 further includes the connecting portion 10C that connects the first block 10L and the second block 10R. The connecting portion 10C has a length along the left-right direction D2 in a front view (viewed from the front side), and the first block 10L and the second block 10R each have a length along the up-down direction D1.

Herein, the connecting portion 10C connects an upper end of the first block 10L and an upper end of the second block 10R, in other words, the first block 10L and the second block 10R protrude downward from both ends of the connecting portion 10C (in the left-right direction D2), respectively. This allows the machine body 10 to have a gantry shape in which the machine body 10 is opened downward by the first block 10L, the second block 10R, and the connecting portion 10C, in addition to both sides of the machine body 10 in the front-back direction D3. Further, the space Sp1 that is surrounded on three sides by the first block 10L, the second block 10R, and the connecting portion 10C, and is opened in the front-back direction D3 is formed inside the machine body 10.

In short, as illustrated in FIG. 2, the machine body 10 has the space Sp1 for passing a crop V1 (work object) being an object for a work (spraying work) by the spraying device 4 (work unit) between the first block 10L and the second block 10R. Specifically, a size of each unit of the machine body 10 is set in such a way that the space Sp1 having a height and a width equal to or more than a standard size of a crop V1, which is an object to be sprayed, is formed based on the standard size of the crop V1 as a reference. Therefore, as far as a crop V1 is of a standard size, the machine body 10 can allow the crop V1 to pass through the space Sp1 in a state that the machine body 10 straddles the crop V1 with a gap equal to or more than a predetermined value in such a way that the crop V1 does not come into contact with the machine body 10. When the crop V1 is passing through the space Sp1, the first block 10L is located on the left side of the crop V1, the second block 10R is located on the right side of the crop V1, and the connecting portion 10C is located above the crop V1.

More specifically, in the present embodiment, the machine body 10 is configured to be substantially symmetrical in the left-right direction D2. The first block 10L and the second block 10R are formed into a rectangular shape with the substantially same size and shape in a side view. The first block 10L and the second block 10R each have a flat shape in the left-right direction D2 with a smallest size in the left-right direction D2 among the up-down direction D1, the left-right direction D2, and the front-back direction D3. Also, the first block 10L and the second block 10R are each formed into a tapered shape in such a way that the size in the left-right direction D2 decreases toward an upper end at an upper portion with respect to a middle portion in the up-down direction D1. The connecting portion 10C is formed into a rectangular shape in such a way that the size in the front-back direction D3 is larger than that in the left-right direction D2 in a plan view. The connecting portion 10C has a flat shape in the up-down direction D1 with a smallest size in the up-down direction D1 among the up-down direction D1, the left-right direction D2, and the front-back direction D3.

As described above, the machine body 10 is roughly divided into three portions (blocks), namely, the first block 10L, the second block 10R, and the connecting portion 10C. Further, each of the first block 10L, the second block 10R, and the connecting portion 10C has the frame 101 and the cover 102. In other words, each of the first block 10L and the second block 10R has the frame 101 and the cover 102. In addition, most of the components of the spraying machine 1 such as the positioning device 2 and the support frame 3 are provided in the first block 10L, the second block 10R, and the connecting portion 10C in a distributed manner.

The machine body 10 also includes a traveling unit 11. The traveling unit 11 is a traveling device (vehicle body) that causes the spraying machine 1 to travel, and is installed at a lower portion of the machine body 10. By causing the machine body 10 to travel (including turning) on the ground by the traveling unit 11, the machine body 10 is movable in the field F1 in the left-right direction D2 and in the front-back direction D3. Providing the traveling unit 11 as described above in the machine body 10 allows the spraying machine 1 to perform a work (spraying work), while moving within the field F1.

The traveling unit 11 is a crawler-type traveling device including a crawler 111. The traveling unit 11 also includes a motor 112 that drives the crawler 111. In other words, the traveling unit 11 causes the spraying machine 1 to travel by driving the crawler 111 by the motor 112. As an example in the present embodiment, the motor 112 is a hydraulic motor (hydraulic actuator), and drives the crawler 111 by supplying hydraulic oil from a hydraulic pump. According to this configuration, the machine body 10 can travel relatively stably, even when a road surface condition of the field F1 is rough.

Herein, the traveling unit 11 is provided at a lower portion of each of the first block 10L and the second block 10R. In other words, the machine body 10 includes the traveling unit 11 for each of the first block 10L and the second block 10R. In other words, the machine body 10 includes a pair of left and right traveling units 11 (crawlers 111). The traveling unit 11 on the side of the first block 10L, and the traveling unit 11 on the side of the second block 10R face each other in the left-right direction D2 via the space Sp1. In this way, the pair of traveling units 11 are disposed away from each other in the left-right direction D2 by a gap corresponding to the space Sp1. Thus, the spraying machine 1 can travel in a relatively stable posture on various road conditions of the field F1, including a transversely inclined slope where the ground is lowered on either side in the left-right direction D2, or the like.

The pair of traveling units 11 are driven by power from the power source 63 in a state that the speed is independently shiftable by a hydrostatic continuously variable transmission. Therefore, the machine body 10 moves straight in a forward direction when the pair of traveling units 11 (crawlers 111) are driven at a constant speed in the forward direction, and moves straight in a backward direction, when the pair of traveling units 11 are driven at a constant speed in the backward direction. Also, the machine body 10 turns while moving forward, when the pair of traveling units 11 are driven at a non-constant speed in the forward direction, and turns while moving backward, when the pair of traveling units 11 are driven at a non-constant speed in the backward direction. The machine body 10 also makes a pivot turn, when either one of the pair of traveling units 11 is driven while the other is stopped, and makes a spin turn, when the pair of traveling units 11 are driven at a non-constant speed in the forward direction and in the backward direction. The machine body 10 is also brought to a stop state, when driving of the pair of traveling units 11 is stopped.

The power source 63 and other components are mounted on the first block 10L, and the tank 64 and other components are mounted on the second block 10R. Thus, arranging the components of the spraying machine 1 in a distributed manner in the first block 10L and the second block 10R of the machine body 10 achieves balancing of the spraying machine 1 in the left-right direction D2, and lowering the center of gravity of the spraying machine 1. Consequently, the spraying machine 1 can travel stably on a slope or the like of the field F1. Distribution of the components is described in detail in the section "[4] Layout of Power Source and Other Components".

As described above, the positioning device 2 is a device that detects a current position, a current orientation, and the like of the machine body 10. The positioning device 2 includes at least the antenna 21. The antenna 21 receives a GNSS signal and the like to be transmitted from the satellite 204. In other words, the antenna 21 includes a position-specific antenna for determining a position of the machine body 10. Herein, the antenna 21 is disposed on an upper surface (top surface) of the machine body 10 in such a way that a signal (GNSS signal) from the satellite 204 can be easily received. In other words, the antenna 21 is disposed at a position higher than the highest position of the machine body 10. Furthermore, the positioning device 2 includes a posture detection unit that detects a posture of the machine body 10, and the like.

In the present embodiment, the positioning device 2 further includes an antenna 22, which is a second antenna, in addition to the antenna 21, which is a first antenna. The positioning device 2 receives a GNSS signal and the like by each of these two antennas 21 and 22. Herein, the antenna 22 (second antenna) is disposed to be aligned in the front-back direction D3 with respect to the antenna 21 (first antenna). Furthermore, the antenna 22 (second antenna) is located on a virtual straight line L1 (see FIG. 7) extending from a rotation axis Ax1 (see FIG. 1) to be described later. In short, both of the two antennas 21 and 22 of the positioning device 2 are disposed on the upper surface (top surface) of the machine body 10, and are disposed to be located on the virtual straight line L1 along the front-back direction D3. This allows the positioning device 2 to transmit and receive a signal (such as a GNSS signal) by each of the antennas 21 and 22. In particular, in a case where the antennas 21 and 22 are position-specific antennas, since a current position can be determined at each of a front portion and a rear portion of the machine body 10, it becomes possible to determine an orientation (current orientation) of the machine body 10 as well.

The support frame 3 is a member that is mounted on one end of the machine body 10 in the front-back direction D3, and supports a spraying portion 41 of the spraying device 4 to be described later. In the present embodiment, the support frame 3 is mounted on a rear end of the machine body 10. Similarly to the machine body 10, the support frame 3 has a gantry shape, and is disposed at a position overlapping the machine body 10 in a rear view (when viewed from the rear side). In other words, the support frame 3 includes a vertical frame 3L (first vertical frame) and a vertical frame 3R (second vertical frame) that are disposed side by side in the left-right direction D2, and a horizontal frame 3C that connects an upper end of the vertical frame 3L and an upper end of the vertical frame 3R. Thus, the support frame 3 has a gantry shape in which a left portion, a right portion, and an upper portion of the space Sp1 are surrounded by the vertical frame 3L, the vertical frame 3R, and the horizontal frame 3C.

Specifically, the support frame 3 includes the vertical frame 3L and the vertical frame 3L disposed side by side in the left-right direction D2. The vertical frame 3L and the vertical frame 3R face each other in the left-right direction D2 with a gap equal to or more than a predetermined value. As an example in the present embodiment, the vertical frame 3L is located on the left side, and the vertical frame 3R is located on the right side. Therefore, the vertical frame 3L is located behind the first block 10L of the machine body 10, and the vertical frame 3R is located behind the second block 10R of the machine body 10. Further, the horizontal frame 3C has a length along the left-right direction D2 in a rear view (when viewed from the rear side), and the vertical frame 3L and the vertical frame 3R each have a length along the up-down direction D1.

Herein, the horizontal frame 3C connects an upper end of the vertical frame 3L and an upper end of the vertical frame 3R, in other words, the vertical frames 3L and 3R protrude downward from both ends of the horizontal frame 3C (in the left-right direction D2), respectively. In this way, the support frame 3 includes the horizontal frame 3C having a length along the left-right direction D2, and the pair of vertical frames 3L and 3R each having a length along the up-down direction D1, and protruding downward from both ends of the horizontal frame 3C. Thus, the support frame 3 has a gantry shape in which the support frame 3 is opened downward by the vertical frame 3L, the vertical frame 3R, and the horizontal frame 3C, in addition to both sides of the support frame 3 in the front-back direction D3. Further, the space Sp1 that is surrounded on three sides by the vertical frame 3L, the vertical frame 3R, and the horizontal frame 3C, and is opened in the front-back direction D3 is formed inside the support frame 3.

In short, as illustrated in FIG. 2, the support frame 3 has the space Sp1 through which a crop V1 (work object, an object to be sprayed) being an object for a work (spraying work) by the spraying device 4 (work unit) is allowed to pass between the pair of vertical frames 3L and 3R. Specifically, a size of each unit of the support frame 3 is set in such a way that the space Sp1 having a height and a width equal to or more than a standard size of the crop V1, which is an object to be sprayed, is formed based on the standard size of the crop V1 as a reference. Therefore, as far as a crop V1 is of a standard size, the support frame 3 can allow the crop V1 to pass through the space Sp1, while straddling the crop V1 with a gap equal to or more than a predetermined value in such a way that the crop V1 does not come into contact with the support frame 3. When the crop V1 is passing through the space Sp1, the vertical frame 3L is located on the left side of the crop V1, the vertical frame 3R is located on the right side of the crop V1, and the horizontal frame 3C is located above the crop V1.

More specifically, in the present embodiment, the support frame 3 is configured to be substantially symmetrical in the left-right direction D2. The vertical frame 3L and the vertical frame 3R each have a cylindrical shape with a circular cross section. As an example in the present embodiment, the vertical frame 3L and the vertical frame 3R are each configured by disposing two cylindrical members side by side. The horizontal frame 3C has a square cylindrical shape with a rectangular cross section. Herein, the vertical frame 3L and the vertical frame 3R are each firmly fixed to the horizontal frame 3C by an appropriate fixing means such as a fitting, a bracing fitting, welding, or the like. Therefore, the vertical frame 3L and the vertical frame 3R are each maintained orthogonally to the horizontal frame 3C. In other words, in a rear view, a corner portion between the vertical frame 3L and the horizontal frame 3C, and a corner portion between the vertical frame 3R and the horizontal frame 3C each have a right angle.

By the way, in the present embodiment, the support frame 3 is supported by the machine body 10 to be rotatable around the rotation axis Ax1 in a state that a relative positional relationship between the pair of vertical frames 3L and 3R, and the horizontal frame 3C is maintained. The rotation axis Ax1 is an axis passing through a fulcrum portion 31 provided on the horizontal frame 3C, and extending in the front-back direction D3. In other words, the support frame 3 that supports the work unit (spraying portion 41) is supported by the machine body 10 to be rotatable around the rotation axis Ax1 along the front-back direction D3. Herein, the term "rotation axis" in the present disclosure is a virtual axis (straight line) that serves as a center of rotational motion of a rotating body. In other words, the rotation axis Ax1 is a virtual axis without substance. However, the rotation axis Ax1 may be a member with substance, for example, a shaft pin. A configuration for rotatably supporting the support frame 3 is described in detail in the section "[3] Peripheral Configuration of Support Frame".

The spraying device 4 includes the spraying portion 41 and other components. The spraying device 4 performs a spraying work of spraying a chemical solution as a spraying material stored in the tank 64 onto the crop V1 being an object to be sprayed. The spraying portion 41 is supported by the support frame 3, and is a member that performs spraying of a spraying material. As an example in the present embodiment, the spraying portion 41 is a spray nozzle that actually serves as an outlet for a spraying material (chemical solution). The spraying device 4 has a plurality of spraying portions 41 (twelve spraying portions in the present embodiment, as an example), each of which is constituted of a spray nozzle. The spraying device 4 is described in detail in the section "[3] Peripheral Configuration of Support Frame".

The airflow generation unit 5 generates an airflow that conveys a spraying material (chemical solution) to be discharged from the spraying portion 41. The airflow generation unit 5 is supported by the support frame 3 together with the spraying portion 41. Specifically, the spraying machine 1 according to the present embodiment is an air-assisted spraying machine that sprays a spraying material (chemical solution) by using an airflow to be generated by the airflow generation unit 5. This allows the spraying machine 1 to efficiently spray a spraying material (chemical solution) also to a spraying object (crop V1) located relatively far away from the spraying portion 41. The airflow generation unit 5 is described in detail in the section "[3] Peripheral Configuration of Support Frame".

The user interface 61 is a device that performs at least one of outputting information to the user and accepting an operation. Herein, the user interface 61 includes a display unit 611 such as a liquid crystal display or an organic EL display that displays various pieces of information, and an operation unit 612 such as a touch panel, a knob, or a pushbutton switch that accepts an operation. An operator, who is an example of a user, can perform various settings by operating the operation unit 612 according to an operation screen to be displayed on the display unit 611. Specifically, the operator operates the operation unit 612 of the user interface 61, and performs settings on operating conditions and the like of the spraying device 4. An example of operating conditions of the spraying device 4 includes a pressure (injection pressure), a flow rate, and the like when the spraying device 4 sprays a spraying material from the spraying portion 41.

The obstacle detection device 62 includes a first sensor 621, a second sensor 622, a third sensor 623, and a fourth sensor 624. The first sensor 621 to the fourth sensor 624 are all disposed to face toward the front side of the machine body 10. The first sensor 621 is disposed at a front left end on an upper surface of the machine body 10, the second sensor 622 is disposed at a front right end on the upper surface of the machine body 10, the third sensor 623 is disposed on a front surface of the first block 10L, and the fourth sensor 624 is disposed on a front surface of the second block 10R, respectively. The obstacle detection device 62 further includes a fifth sensor 625 (see FIG. 5), and a sixth sensor 626 (see FIG. 6). Both of the fifth sensor 625 and the sixth sensor 626 are disposed to face toward the rear side of the machine body 10. The fifth sensor 625 is mounted on the vertical frame 3L, and the sixth sensor 626 is mounted on the vertical frame 3R.

Each of the first sensor 621 to the sixth sensor 626 includes a sensor such as, for example, an image sensor (camera), a sonar sensor, a radar, or light detection and ranging (LiDAR), and detects surrounding conditions of the machine body 10. As an example in the present embodiment, each of the first sensor 621 to the sixth sensor 626 is a three-dimensional sensor that measures a distance to each measuring point (measurement object) within a measurement range by a time of flight (TOF) method of measuring a distance to a measuring point, based on a round trip time from a time when light or sound reaches the measuring point until its return. The surrounding conditions of the machine body 10 include, for example, presence or absence of an object (such as an obstacle) present on the front side of the machine body 10 in a traveling direction, a position (a distance and an orientation) of the object, and the like.

The obstacle detection device 62 further includes a front contact sensor 627 and a rear contact sensor 628. The front contact sensor 627 is disposed on the front side of the machine body 10 in a pair on the left side and the right side, and the rear contact sensor 628 is disposed on the rear side of the machine body 10 in a pair on the left side and the right side. Each of the front contact sensor 627 and the rear contact sensor 628 detects an obstacle, when the machine body 10 comes into contact with the obstacle. Each sensor transmits a detection signal to a control device, when detecting an obstacle.

The power source 63 is a drive source that supplies power to at least the traveling unit 11. The power source 63 has an engine such as, for example, a diesel engine. The power source 63 drives a hydraulic pump, and drives the traveling unit 11 and the like by supplying hydraulic oil from the hydraulic pump to the motor 112 and other components of the traveling unit 11.

The tank 64 stores a spraying material such as a chemical solution. The spraying material stored in the tank 64 is supplied to the spraying device 4, and is sprayed from the spraying portion 41 of the spraying device 4. The tank 64 can be refilled with a chemical solution being a spraying material from the outside. The capacity of the tank 64 is about 200L, as an example.

The indicator 65 is disposed on the upper surface of the machine body 10. The indicator 65 is formed into a cylindrical shape having a length in the up-down direction D1, as an example. The indicator 65 changes its lighting state according to an operating state (such as a traveling state, and a state of performing a spraying work) of the spraying machine 1. This makes it possible to visually recognize an operating state of the spraying machine 1 even from the vicinity of the spraying machine 1.

Further, the control device includes an automatic traveling control unit, an engine control unit, a hydrostatic transmission (HST) control unit that performs control related to hydrostatic continuously variable transmission, a work device control unit, and the like. The automatic traveling control unit causes the machine body 10 to automatically travel along a target route of the field F1, based on positioning information and the like to be acquired from the positioning device 2. The engine control unit performs control related to an engine. The HST control unit performs control related to the hydrostatic continuously variable transmission. The work device control unit performs control related to a work device such as the spraying device 4. Each control unit is configured by an electronic control unit incorporated with a microcontroller and other components, various pieces of information, a control program, and the like stored in a non-volatile memory of the microcontroller.

The communication terminal is a communication interface that connects the spraying machine 1 to a communication network by wired or wireless connection, and performs data communication with external equipment such as the operation terminal 201 and the server 202 via the communication network according to a predetermined communication protocol. Electronic equipment such as the positioning device 2, a control device, and a communication device is connected to a battery, and is operable even when the power source 63 is stopped.

### [3] Peripheral Configuration of Support Frame

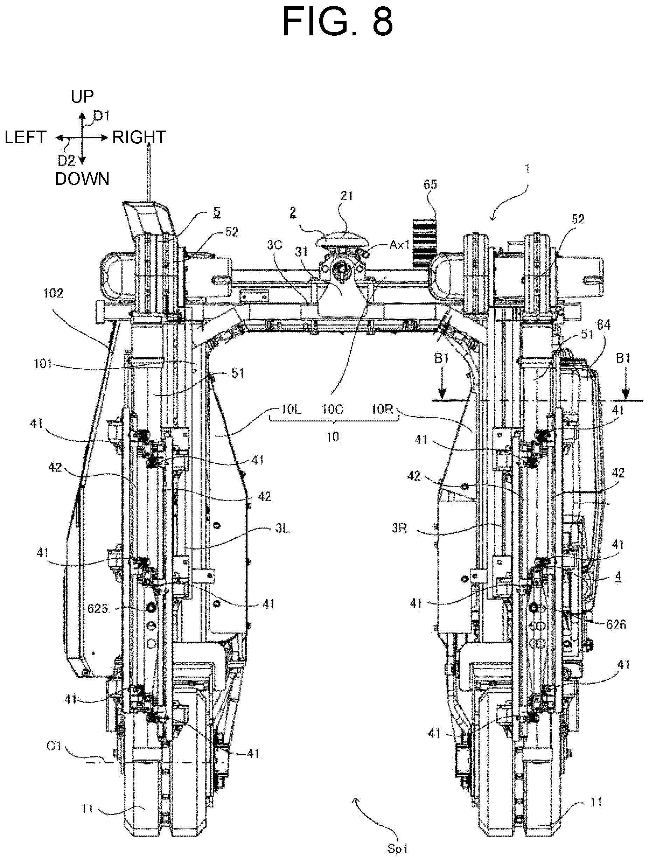

Next, a configuration of a rear section, which is the vicinity of the support frame 3 of the spraying machine 1 according to the present embodiment, is described with reference to FIGS. 8 through 11.

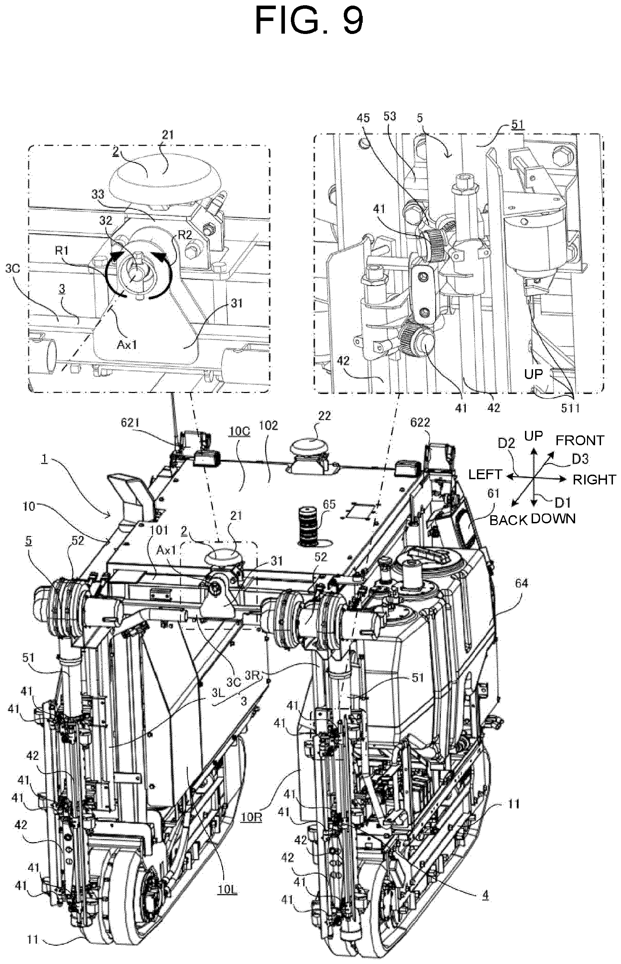

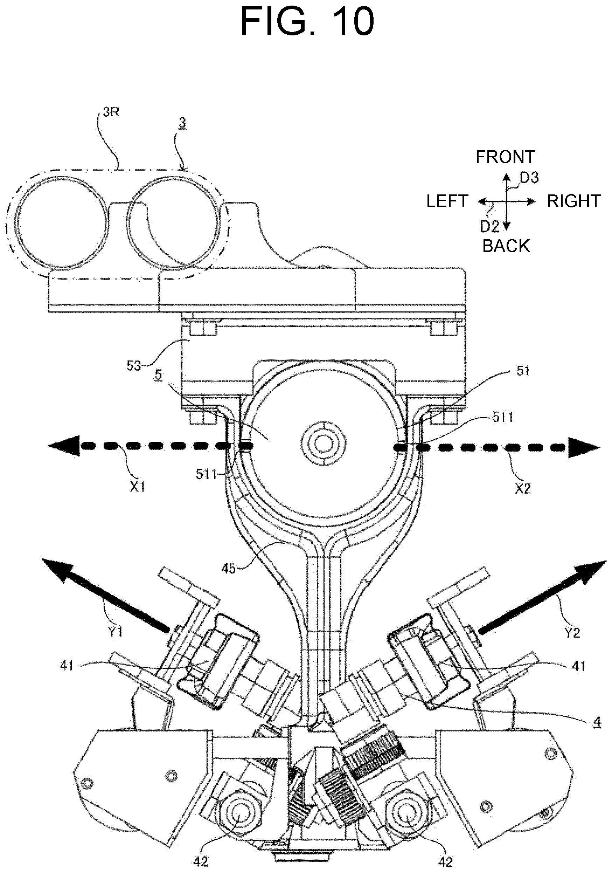

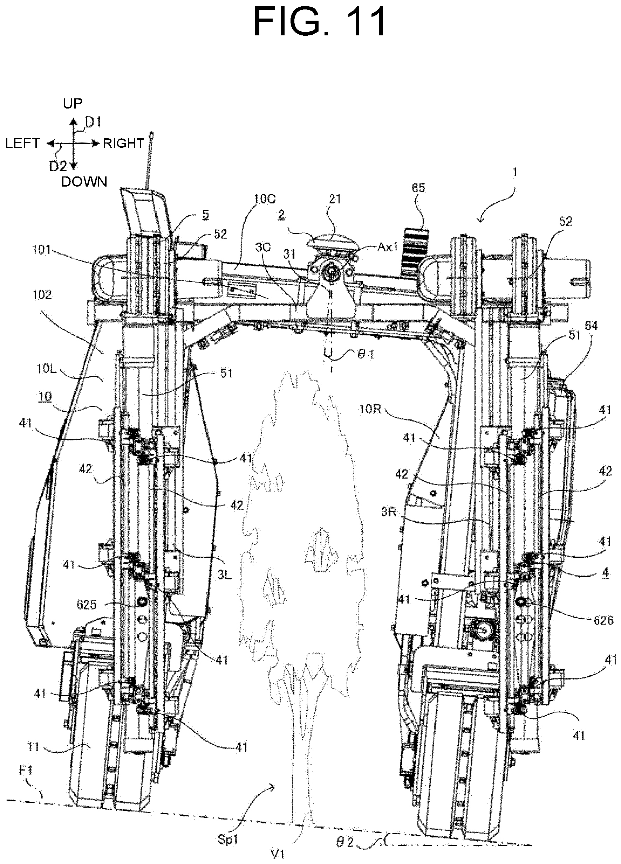

FIG. 8 is an external view of a back surface of the spraying machine 1 when viewed from the back side (rear side). FIG. 9 is a schematic view of the spraying machine 1 when viewed obliquely from behind, and a partially enlarged view is illustrated within a balloon portion. FIG. 10 is a cross-sectional view of a rear portion of the spraying machine 1 with respect to the vertical frame 3R, and corresponds to a cross section taken along the line B1-B1 in FIG. 8. FIG. 11 is an external view of the back surface of the spraying machine 1 when viewed from the back side (rear side), when the spraying machine 1 is traveling on a slope with a transverse inclination.

The spraying device 4 includes, in addition to the spraying portion 41 constituted of a spray nozzle, a spraying pipe 42, a pump 43 (see FIG. 6), a valve 44 (see FIG. 6), a spray piping, and other components.

The spraying portion 41 is an example of a work unit that performs a work (spraying work), and is supported by the support frame 3. Since the support frame 3 is supported by the machine body 10, the spraying portion 41 (work unit) is indirectly supported by the machine body 10. In the present embodiment, the spraying portion 41 is mounted on the spraying pipe 42. The spraying pipe 42 is connected to the pump 43 via the valve 44 by a spray piping. The pump 43 pumps a spraying material (chemical solution) stored in the tank 64 into the spraying pipe 42. The valve 44 is an electronically controlled valve unit such as an electromagnetic valve, and changes a pressure (spray pressure), a spray pattern, and the like, when a spraying material is sprayed. Thus, a chemical solution within the tank 64 is supplied to the spraying portion 41 by the pump 43 via the valve 44 and the spraying pipe 42, and is sprayed from the spraying portion 41. Herein, a chemical solution in the form of mist is discharged (sprayed) from the spraying portion 41, which is a spray nozzle.

More specifically, as illustrated in FIGS. 8 and 9, the spraying pipe 42 is a piping having a length in the up-down direction D1, and two pipes are mounted for each of the vertical frame 3L and the vertical frame 3R of the support frame 3. In other words, in the present embodiment, the spraying device 4 has four spraying pipes 42 in total. Two (a pair of) spraying pipes 42 mounted for each of the vertical frame 3L and the vertical frame 3R are disposed side by side in the left-right direction D2. Each spraying pipe 42 discharges a chemical solution as a spraying material to be injected from an upper end thereof from three spraying portions 41, while causing the chemical solution to flow downward through the pipe. Three spraying portions 41 are mounted on each spraying pipe 42. Thus, the spraying device 4 has twelve spraying portions 41 in total.

Each spraying portion 41 is mounted on the associated spraying pipe 42 in such a way that a position thereof is changeable in the up-down direction D1. This allows each spraying portion 41 to change a gap between the adjacent spraying portion 41, and a height position with respect to the spraying pipe 42 according to an object to be sprayed (crop V1). In addition, each spraying portion 41 is mounted in such a way that a position and an orientation (angle) in the up-down direction D1 and in the left-right direction D2 with respect to the machine body 10 are changeable according to an object to be sprayed. However, in the spraying device 4, the number and the like of spraying portions 41 provided for each spraying pipe 42 can be changed as necessary according to a type of an object to be sprayed (crop V1), a length of each spraying pipe 42, or the like.

The airflow generation unit 5 includes a duct 51 and a blower 52. The duct 51 forms a channel through which air flows along the up-down direction D1. The blower 52 flows air into the duct 51. The airflow generation unit 5 forms an airflow, when air is blown out through a blowout hole 511 (see FIG. 9), which is formed in the duct 51. In short, the airflow generation unit 5 generates a stream of air (airflow) that flows to the outside through the blowout hole 511 by causing air to be fed from the blower 52 into the duct 51 to blow out through the blowout hole 511 via a channel within the duct 51. According to this configuration, a stable airflow can be generated in a relatively wide area. Furthermore, the airflow generation unit 5 can adjust an airflow rate of airflow by controlling the blower 52. The airflow generation unit 5 can adjust a conveyance distance of a spraying material by adjusting the airflow rate, and can convey the spraying material farther, as the airflow rate increases. Thus, the spraying machine 1 according to the present embodiment can adjust a spraying area of a spraying material by the spraying device 4.

More specifically, the duct 51 is a piping having a length in the up-down direction D1, and one pipe is mounted for each of the vertical frame 3L and the vertical frame 3R of the support frame 3. In other words, in the present embodiment, the airflow generation unit 5 has two ducts 51 in total. A plurality of blowout holes 511 are formed in each duct 51 in such a way that the blowout holes 511 are aligned along the up-down direction D1 on each of a left surface and a right surface of the duct 51. Each duct 51 causes air flowing in from an upper end thereof to blow out through each of the plurality of blowout holes 511, while causing the air to flow downward through the pipe. The blower 52 is mounted on an upper end of each duct 51, and feeds air from an upper end of the duct 51 into the duct 51. In other words, in the present embodiment, the airflow generation unit 5 has two blowers 52 in total. Herein, each blowout hole 511 passes through a pipe wall of the duct 51 in the left-right direction D2, and as illustrated in FIG. 10, air blown out through each blowout hole 511 forms airflows X1 and X2 that flow outward in the left-right direction D2. As an example in the present embodiment, the blower 52 is a blower that is electrically driven and feeds air into the duct 51.

As illustrated in FIG. 10, the duct 51 of the airflow generation unit 5 is fixed to the vertical frame 3R by a mounting bracket 53 in such a way to be located behind the vertical frame 3R. In addition, the two spraying pipes 42 of the spraying device 4 are fixed to the duct 51 by a mounting bracket 45 in such a way as to be located behind the duct 51. Thus, the two spraying pipes 42 are indirectly mounted on the vertical frame 3R, and the spraying portion 41 mounted on each spraying pipe 42 is indirectly supported by the vertical frame 3R. As an example in the present embodiment, a plurality of (e.g. three) mounting brackets 45 are provided for one duct 51 in the up-down direction D1, and fix the spraying pipe 42 to the duct 51 at a plurality of positions in a longitudinal direction (up-down direction D1). The mounting bracket 45 also serves as a fixture for the spraying portion 41, and the spraying portion 41 is firmly fixed by being mounted on the mounting bracket 45.

Herein, the duct 51, the two spraying pipes 42 mounted thereon, and the six spraying portions 41 in total mounted on these two spraying pipes 42 are symmetrically disposed in the left-right direction D2. Further, as illustrated in FIG. 10, the three spraying portions 41 provided for the left spraying pipe 42 of the two spraying pipes 42 discharge a spraying material Y1 toward the front left side, and the three spraying portions 41 provided for the right spraying pipe 42 discharge a spraying material Y2 toward the front right side. Therefore, the misty spraying material Y1 to be discharged from the left spraying portion 41 is conveyed to the left side, while being carried by the airflow X1 blown out to the left side from the duct 51, and the misty spraying material Y2 to be discharged from the right spraying portion 41 is conveyed to the right side, while being carried by the airflow X2 blown out to the right side from the duct 51.

Therefore, the three spraying portions 41 provided for the leftmost spraying pipe 42 among the plurality of (twelve) spraying portions 41 spray a chemical solution leftward onto the crop V1, which is located on the outer left side of the machine body 10. The three spraying portions 41 provided for the inner left spraying pipe 42 adjacent to the leftmost spraying pipe 42 among the plurality of spraying portions 41 spray a chemical solution rightward onto the crop V1, which is located in the space Sp1 inside of the machine body 10. The three spraying portions 41 provided for the rightmost spraying pipe 42 among the plurality of spraying portions 41 spray a chemical solution rightward onto the crop V1, which is located on the outer right side of the machine body 10. The three spraying portions 41 provided for the inner right spraying pipe 42 adjacent to the rightmost spraying pipe 42 among the plurality of spraying portions 41 spray a chemical solution leftward onto the crop V1, which is located in the space Sp1 inside of the machine body 10.

According to the above configuration, in the spraying device 4, the two spraying pipes 42, and the six spraying portions 41 provided for the vertical frame 3L of the support frame 3 function as a left spraying unit. Further, the two spraying pipes 42 and the six spraying portions 41 provided for the vertical frame 3R of the support frame 3 function as a right spraying unit. The pair of left and right spraying units are disposed away from each other with a gap (space Sp1) that allows passing of the crop V1 in a state that spraying in the left-right direction D2 is allowed on a rear portion of the machine body 10.

Furthermore, a plurality of spraying portions 41 (three spraying portions 41 in this case) disposed away from one another in the up-down direction D1 are provided for each spraying pipe 42 mounted on the vertical frame 3L or the vertical frame 3R of the support frame 3. Therefore, the spraying device 4 can spray, by the plurality of spraying portions 41, a spraying material from a plurality of positions in the up-down direction D1 along the vertical frame 3L or the vertical frame 3R of the support frame 3. Consequently, the spraying device 4 can evenly spray a chemical solution, which is a spraying material, from a lower part to an upper part of the crop V1, which is an object to be sprayed.

Further, the spraying device 4 is configured in such a way that the plurality of (twelve) spraying portions 41 are divided into a plurality of systems to be controllable for each system. As an example, six spraying portions 41 provided for the inner two spraying pipes 42 in the left-right direction D2 among four spraying pipes 42 are classified as a first system, three spraying portions 41 provided for the leftmost spraying pipe 42 are classified as a second system, and three spraying portions 41 provided for the rightmost spraying pipe 42 are classified as a third system. Therefore, spray patterns by the spraying device 4 include an overall spray pattern in which a spraying material (chemical solution) is sprayed from all of the spraying portions 41, and a limited spray pattern in which the spraying direction is limited. The limited spray pattern includes a first spray pattern in which only the six spraying portions 41 of the first system perform spraying, a second spray pattern in which only the three spraying portions 41 of the second system perform spraying, and a third spray pattern in which only the three spraying portions 41 of the third system perform spraying. Furthermore, the limited spray pattern includes a fourth spray pattern in which only the nine spraying portions 41 of the first and second systems perform spraying, a fifth spray pattern in which only the nine spraying portions 41 of the first and third systems perform spraying, and a sixth spray pattern in which only the six spraying portions 41 of the second and third systems perform spraying.

The spraying device 4 is controlled by a control device (work device control unit), and the above-described plurality of spray patterns (the overall spray pattern, and the six limited spray patterns) are switched as necessary. The spraying device 4 can also change a spray area of a spraying material by changing a pressure (spray pressure) at which the spraying material is sprayed for each system. Furthermore, in the present embodiment, since a spray area of a spraying material can also be adjusted by adjusting an airflow rate of the airflow generation unit 5, a more diverse spray area can be achieved according to an object to be sprayed (crop V1) or a spraying material (chemical solution).

By the way, as described above, in the present embodiment, the support frame 3 is supported by the machine body 10 to be rotatable around the rotation axis Ax1, while maintaining a relative positional relationship between the pair of vertical frames 3L and 3R, and the horizontal frame 3C. Specifically, the support frame 3 that supports the spraying portion 41 is not fixed relative to the machine body 10, but is configured to be rotatable around the rotation axis Ax1. As the support frame 3 rotates, the plurality of spraying portions 41 supported by the support frame 3 also rotate around the rotation axis Ax1.

Specifically, as illustrated in FIG. 9, the fulcrum portion 31 is provided at a middle of the horizontal frame 3C in the longitudinal direction (left-right direction D3). The fulcrum portion 31 is a member that serves as a fulcrum at the time of rotation of the support frame 3, and is connected to the horizontal frame 3C by an appropriate connecting means such as welding in a manner such that the fulcrum portion 31 protrudes upward from an upper surface of the horizontal frame 3C. A shaft pin 32 is provided at an upper end of the fulcrum portion 31 in such a way that the shaft pin 32 passes through the fulcrum portion 31 along the front-back direction D2. The shaft pin 32 is a cylindrical shaft member having a length along the front-back direction D2. Furthermore, a bearing stand 33 that supports the shaft pin 32 is disposed at a middle of a rear end of the machine body 10 in the left-right direction. The bearing stand 33 is connected to the frame 101 by an appropriate connecting means such as welding in such a way that the bearing stand 33 protrudes upward from an upper surface of the frame 101 of the machine body 10. The shaft pin 32 is rotatably supported by at least one of the fulcrum portion 31 and the bearing stand 33 via a bearing member such as a bearing.

According to the above configuration, the support frame 3 is rotatably supported around the shaft pin 32 with respect to the machine body 10. On the other hand, the support frame 3 is kept from moving except for rotating around the shaft pin 32 with respect to the machine body 10, for example, moving in parallel to the front-back direction D1. In other words, the central axis of the shaft pin 32 functions as the rotation axis Ax1, and the support frame 3 is supported by the machine body 10 to be rotatable around the rotation axis Ax1.

Herein, the spraying machine 1 further includes a regulating member (not illustrated) that restricts a rotational range (movable range) of the support frame 3 with respect to the machine body 10. The regulating member may be provided at any one of the machine body 10, the support frame 3, the fulcrum portion 31, and the bearing stand 33. By the regulating member as described above, a rotational range of the support frame 3 is restricted within a range of a predetermined angle in each of a first direction R1 (see FIG. 9) and a second direction R2 (see FIG. 9) with respect to a neutral position at which the horizontal frame 3C is parallel to an upper surface of the machine body 10. The first direction R1 is a clockwise direction when viewed from the rear side, and the second direction R2 is a counterclockwise direction when viewed from the rear side. Herein, the predetermined angle can be set as necessary, for example, 5 degrees, 10 degrees, 15 degrees, 20 degrees, 30 degrees, or the like. Furthermore, a mechanism capable of adjusting the predetermined angle may be included.

The spraying machine 1 according to the present embodiment is not provided with an actuator or the like that actively rotates the support frame 3. Therefore, the support frame 3 rotates for the first time when an external force acts on the support frame 3. For example, when the machine body 10 travels on a slope with a transverse inclination, the support frame 3 rotates due to the own weight of the support frame 3, i.e., due to the gravity acting on the support frame 3. Herein, the spraying machine 1 may be provided with a stopper that prohibits rotation of the support frame 3 with respect to the machine body 10. For example, installing the stopper during transportation of the spraying machine 1 prevents vibration of the support frame 3. The spraying machine 1 may also be provided with a damper that exerts a damping force on the support frame 3. This makes it easy to converge vibration of the support frame 3 when the machine body 10 is traveling, for example.

Herein, the fulcrum portion 31 is disposed at an equidistant position of the horizontal frame 3C from the pair of vertical frames 3L and 3R. The term "equidistant" herein includes, in addition to a case where distances from the pair of vertical frames 3L and 3R are exactly the same, a case where a difference in the distance from the pair of vertical frames 3L and 3R lies within an error range of about few centimeters (e.g. less than 10 cm). Therefore, the rotation axis Ax1 passing through the fulcrum portion 31 is located at a center (or substantially center) of the horizontal frame 3C in the longitudinal direction (left-right direction D2). This allows an amount of rise (or an amount of fall) of the vertical frame 3L, and an amount of fall (or an amount of rise) of the vertical frame 3R to be equal to each other during rotation of the support frame 3, and allows the support frame 3 to rotate in a balanced manner. In particular, when the support frame 3, and members to be supported by the support frame 3 (such as the spraying portion 41, the spraying pipe 42, and the airflow generation unit 5) are balanced weightwise in such a way as to be symmetrical in the left-right direction D2, the support frame 3 is maintained at a neutral position as long as the machine body 10 is kept horizontal.

According to the rotatable support frame 3 as described above, for example, as illustrated in FIG. 11, when the machine body 10 is traveling on a slope with a transverse inclination, the support frame 3 rotates. Specifically, when a road surface of the field F1 is transversely inclined in such a way that the right side in the left-right direction D2 is lowered, the machine body 10 is inclined to the right side, but the horizontal frame 3C of the support frame 3 maintains a horizontal posture by the own weight. Therefore, the support frame 3 rotates in the second direction R2 (counterclockwise) around the rotation axis Ax1 with respect to the machine body 10. Herein, a rotational angle θ1 (amount of rotation) of the support frame 3 corresponds to an inclination angle of the machine body 10, i.e., an inclination angle θ2 around the rotation axis Ax1 with respect to a horizontal plane of the field F1. For example, when the inclination angle θ2 of the field F1 is 10 degrees, the support frame 3 rotates by 10 degrees, which is the rotation angle θ1. FIG. 11 illustrates a case where the rotation angle θ1 and the inclination angle θ2 are both 5 degrees.

In the spraying machine 1 according to the present embodiment, even on a slope as illustrated in FIG. 11,unevenness (uneven spraying) in the spraying amount of a spraying material (chemical solution) by the spraying portion 41 is less likely to occur by rotation of the support frame 3. In short, when it is assumed that the support frame 3 is fixedly supported by the machine body 10, the machine body 10 may tilt when traveling on a slope with a transverse inclination. In this case, regarding a crop V1 (an object to be sprayed) that grows vertically straight from the ground (field F1), a distance from the spraying portion 41 differs between an upper part and a lower part of the crop V1, which may cause unevenness in the spraying amount of a spraying material. In contrast, in the spraying machine 1 according to the present embodiment, rotation of the support frame 3 allows the support frame 3, the spraying portion 41 supported by the support frame 3, and other components to maintain the same posture as the posture when the spraying machine 1 travels on a horizontal plane. Therefore, even in a case of the crop V1 (an object to be sprayed) growing vertically straight from the ground (field F1), a distance from the spraying portion 41 is less likely to vary between an upper part and a lower part of the crop V1, and unevenness in the spraying amount of a spraying material is advantageously less likely to occur.

Furthermore, in the present embodiment, since the airflow generation unit 5 is also supported by the support frame 3, it is also possible to keep a direction of an airflow generated by the airflow generation unit 5 in a horizontal direction, regardless of an inclination of the machine body 10 when traveling on a slope with a transverse inclination. Thus, a spraying material can be properly conveyed by air-assist.

In the present embodiment, as illustrated in FIG. 8, the spraying portion 41 is disposed at a position higher than a center C1 of the traveling unit 11 in the up-down direction D1. In other words, in a case where the traveling unit 11 including the crawler 111 is configured in such a way that a portion having a certain height in the up-down direction D1, namely, a center position in the up-down direction is set as the center C1, the spraying portion 41 is located at a position higher than the center C1. In the present embodiment, since a plurality of (twelve) spraying portions 41 are provided, even a spraying portion 41 located at a lowest position among the spraying portions 41 is at a position higher than (above) the center C1 of the traveling unit 11. According to this configuration, since the spraying portion 41 can secure a certain height from the field F1, a spraying material can be easily sprayed from the spraying portion 41 in an appropriate area. Furthermore, also when the support frame 3 rotates with respect to the machine body 10, the spraying portion 41 is less likely to come in contact with the field F1.

By the way, in the present embodiment, the antenna 21 (first antenna) of the positioning device 2 is disposed above the rotation axis Ax1. Specifically, as illustrated in FIG. 9, the antenna 21 is disposed on the bearing stand 33 that supports the shaft pin 32. Since the antenna 21 receives a signal (such as a GNSS signal) to be transmitted from the satellite 204, disposing the antenna 21 at the position allows the signal to be received without being affected by an obstacle. Moreover, as far as the antenna 21 is disposed above the rotation axis Ax1, even when the support frame 3 is swung due to vibration, for example, a change in the position of the antenna 21 can be kept small, and an influence on signal reception (or transmission) at the antenna 21 can be kept small. In particular, in the present embodiment, the antenna 21 is mounted on the bearing stand 33 that supports the shaft pin 32, which is the center of rotation of the support frame 3, even when the support frame 3 rotates, the antenna 21 does not rotate, and the orientation of the antenna 21 remains unchanged. This facilitates stable performance of signal reception (or transmission) at the antenna 21.

Furthermore, in the present embodiment, the rotation axis Ax1 is located at a middle of the support frame 3 in the left-right direction D3. More strictly, the rotation axis Ax1 passing through the fulcrum portion 31 is located at a center (or substantially center) of the horizontal frame 3C in the longitudinal direction (left-right direction D2). Therefore, the antenna 21 is disposed at a position serving as a reference of the machine body 10, and sufficiently exhibits performance as an antenna. In particular, in a case where the antenna 21 is a position-specific antenna, the antenna 21 at a center in a plan view makes it possible to determine a position of the antenna 21, and a center position of the machine body 10 in the left-right direction D2 is determined, thus making it easy to perform position determination processing of the machine body 10. Also, in a case where the machine body 10 has a gantry shape, as in the present embodiment, the antenna 21 is located directly above an object to be sprayed (crop V1), which is allowed to pass through the space Sp1 inside of the machine body 10. Therefore, the above layout is advantageous also in terms of determining a position of an object to be sprayed.

In addition to the above, in the present embodiment, as illustrated in FIG. 7, the antenna 22 (the second antenna), which is different from the antenna 21 (the first antenna), is also disposed on the virtual straight line L1 extending from the rotation axis Ax1. Therefore, both of the two antennas 21 and 22 are located on a centerline (virtual straight line L1) of the machine body 10 in the left-right direction D2, and performance as an antenna can be easily and sufficiently exhibited. In particular, in a case where the antennas 21 and 22 are position-specific antennas, since the antennas 21 and 22 can accurately determine a current position at each of a front portion and a rear portion of the machine body 10, it is possible to accurately determine an orientation (current orientation) of the machine body 10 as well.

### [4] Layout of Power Source and Other Components

Next, a layout of the power source 63 and other components in the machine body 10 is described in more detail with reference to FIGS. 5, 6 and 7.

Components of the spraying machine 1 such as the power source 63, and the tank 64 are disposed in a distributed manner in the first block 10L and the second block 10R of the machine body 10. Herein, the power source 63 for driving the machine body 10 is disposed in the first block 10L, and the user interface 61 that performs at least one of outputting information to the user and accepting an operation is disposed in the second block 10R. In the present embodiment, the power source 63 is an engine that supplies power to at least the traveling unit 11 by driving a hydraulic pump. Therefore, not only the power source 63, but also a hydraulic pump, a fuel tank that supplies fuel to the power source 63, and other components, are disposed in the first block 10L.

In this way, in the present embodiment, in the machine body 10 in which the first block 10L and the second block 10R are aligned in the left-right direction D2, the power source 63 is disposed in the first block 10L in a biased manner. Therefore, on the side of the first block 10L where the power source 63 is disposed, an influence such as heat, vibration, electromagnetic noise, or sound generated by the power source 63 becomes large. In other words, the power source 63 such as an engine or a motor may become a heat source that generates heat, a vibration source that generates vibration, a noise source that generates electromagnetic noise, a noise source that generates noise, or the like, when the power source 63 is driven. For example, when it is assumed that the user interface 61 is disposed on the side of the first block 10L where the power source 63 is disposed, heat, sound, or the like generated by the power source 63 may affect the user using the user interface 61, and may interfere with a user's work. Furthermore, electronic equipment such as the user interface 61 is susceptible to damage from heat, vibration, electromagnetic noise, or the like generated by the power source 63.

In the spraying machine 1 according to the present embodiment, at least the user interface 61 is not provided on the side of the first block 10L where the power source 63 is disposed, but is provided in the second block 10R. Therefore, the user using the user interface 61, or the user interface 61 itself is less likely to be affected by heat, vibration, electromagnetic noise, sound, or the like generated by the power source 63. Consequently, it is possible to achieve the spraying machine 1 (work machine) in which heat, vibration, electromagnetic noise, sound, or the like generated by the power source 63 is less likely to be a problem.

In particular, in the present embodiment, the space Sp1 through which the crop V1 (work object) is allowed to pass is formed between the first block 10L and the second block 10R. Therefore, according to the layout of the power source 63 and the user interface 61 described above, the space Sp1 intervenes between the power source 63 and the user interface 61, and an influence on the user interface 61 by heat, vibration, electromagnetic noise, sound, or the like generated by the power source 63 can be significantly reduced.

Specifically, as illustrated in FIG. 5, the power source 63 is housed within a front half portion of the first block 10L. The power source 63 is basically covered by the cover 102, and an influence of heat and the like generated by the power source 63 on the vicinity of the machine body 10 is also suppressed. On the other hand, as illustrated in FIG. 6, the user interface 61 is disposed in such a way as to expose to the right side with respect to the second block 10R. Therefore, the user using the user interface 61 basically uses the user interface 61, standing on the right side of the machine body 10. This significantly reduces an influence of, for example, heat, sound, and the like generated by the power source 63 on the user using the user interface 61.

In the present embodiment, the work unit includes the spraying portion 41 that performs, as a work, spraying a spraying material (chemical solution), and the tank 64 storing the spraying material is disposed in the second block 10R. In other words, the tank 64, which is a heavy object as well as the power source 63, is not provided on the side of the first block 10L where the power source 63 is disposed, but is provided on the second block 10R. Therefore, weight balance is secured between the first block 10L and the second block 10R of the machine body 10, which contributes to stabilization of the posture of the machine body 10 and improvement of traveling performance (including turning performance). The tank 64 is fixed to the frame 101 of the second block 10R. The cover 102 is not provided at a position of the second block 10R associated with the tank 64, and at least a right surface and an upper surface of the tank 64 are exposed.

In particular, in the present embodiment, weight balance is secured between the first block 10L and the second block 10R, when a remaining amount of a spraying material within the tank 64 is half (one-half) of a capacity of the tank 64, whereby weight balance during actual use of the spraying machine 1 is an appropriate balance. Specifically, whereas a remaining amount of a spraying material may vary between 100% and 0% with respect to a capacity of the tank 64, when the remaining amount is 50%, which is a median value thereof, the weight is balanced between the first block 10L and the second block 10R. Therefore, during actual use (work) of the spraying machine 1, a remaining amount of a spraying material varies in a state (remaining amount: 50%) that the weight is balanced between the first block 10L and the second block 10R, and it is easy to secure weight balance between the first block 10L and the second block 10R. Also, even in a case where a remaining amount of a spraying material is more or less than 50%, a difference in the weight between the first block 10L and the second block 10R is kept equal to or less than the weight of the spraying material, which is a half of the capacity of the tank 64. This avoids extreme weight imbalance between the first block 10L and the second block 10R.

More specifically, as illustrated in FIG. 6, the tank 64 occupies a major part of the second block 10R in a side view (viewed from the right side). As an example, the tank 64 has a hexagonal shape, in which each lower corner on both sides of the tank 64 in the front-back direction D2 is cutout into a triangular shape, based on a rectangular shape having a long length in the front-back direction D3. The shape of the tank 64 as described above secures a space for each of the front side and the rear side below the tank 64. The pump 43 and other components of the spraying device 4 are disposed within the space on the front side in the space below the tank 64, and the valve 44 and other components are disposed within the space on the rear side. The valve 44 is provided for each system of the plurality of spraying portions 41. In the present embodiment, three valves 44 associated with three systems (the first system, the second system, and the third system) are provided.

In the present embodiment, the user interface 61 includes an operation unit 612 that accepts an operation for adjustment related to a work (spraying work), and a display unit 611 that displays information related to an operation. More specifically, the display unit 611 constituted of, for example, a liquid crystal display is disposed at a position close to a front end of the second block 10R, and a knob, a pushbutton switch, or the like as the operation unit 612 is disposed below the display unit 611. This allows the user to operate the operation unit 612, while watching a setting screen and the like to be displayed on the display unit 611.

Also, a control box 613 that controls a motor of the pump 43 is disposed above the pump 43. A knob, a pushbutton switch, or the like as the operation unit 612 is also disposed in the control box 613. Furthermore, a knob for controlling the valve 44 is disposed above the valve 44, specifically, three knobs are disposed as the operation unit 612 in association with three valves. By operating the operation unit 612 of the control box 613, the user can control an operation of the pump 43, and adjust a flow rate of a spraying material (chemical solution), and by operating the operation unit 612 above the valve 44, the user can adjust opening and closing of the valve 44, or a pressure (spray pressure) of a spraying material. Also in a case of operating the operation unit 612, for example, by causing the display unit 611 to display a measurement value of a flowmeter, a measurement value of a pressure gauge, or the like, and performing a work while watching an indication on the display unit 611, an operation for adjustment related to the work is made easy. However, since the operation unit 612 and the like above the valve 44 are located relatively away from the display unit 611, it is preferable for two users, for example, to work together and perform adjustment work. In this case, it is preferable that one of the users checks an indication on the display unit 611, and the other user operates the operation unit 612 in terms of improving performance of adjustment work.

### [5] Modification Examples

In the following, modification examples of the first embodiment are described. The modification examples described below can be combined as necessary.

The spraying machine 1 may be used not only in orchards such as vineyards or apple orchards, but also for other fields FL, and a work within a work area other than the field F1. Furthermore, a spraying material to be sprayed by the spraying machine 1 is not limited to a chemical solution, but may also be, for example, water, a fertilizer, a disinfectant, other liquids, powders, or the like. Similarly, an object to which a spraying material is sprayed is not limited to grapevines, but may also be other crops or objects (including inorganic objects) other than crops. Also, the spraying machine 1 is not limited to an unmanned machine that is operated by autonomous driving, but the spraying machine 1 may be configured to be operated by an operation (including remote control) by a person (operator). For example, the spraying machine 1 may be of a passenger-type machine (manned machine) in which an operator can board. Even in this case, the spraying machine 1 is provided with an antenna 21 and the like to recognize a current position of the spraying machine 1.

Further, the support frame 3 may be mounted on one end of the machine body 10 in the front-back direction D3, and may be mounted on the front side of the machine body 10. In this case, a work unit (spraying portion 41) supported by the support frame 3 is also disposed on the front side of the machine body 10 instead of the rear side.

As far as the machine body 10 includes the first block 10L and the second block 10R aligned in the left-right direction D2, positions of the first block 10L and the second block 10R may be reversed in the left-right direction. In other words, the first block 10L where the power source 63 and other components are provided may be located on the right side, and the second block 10R where the user interface 61 and other components are provided may be located on the left side.

The traveling unit 11 is not limited to a crawler-type traveling device, but may include one or more wheels, for example, and may be configured to travel by rotation of the wheels. Also, the traveling unit 11 is not limited to a configuration driven by a hydraulic motor, but may be configured to be driven by an electric motor, for example.

The spraying machine 1 is not limited to an air-assisted spraying machine as described in the first embodiment, but may be, for example, a spraying machine by an electrostatic spraying method or a method in which an air-assist method and an electrostatic spraying method are combined. As far as the spraying machine 1 is of an electrostatic spraying method, the airflow generation unit 5 can be omitted.

Moreover, the power source 63 may have a motor (electric motor), for example, in addition to an engine, or may be a hybrid power source including an engine and a motor.

In addition to the above, the spraying machine 1 may have a configuration in which the entirety of the machine body 10 travels through a space (work passage) between a pair of adjacent crop rows Vr1, instead of a gantry-shaped machine body 10. In this case, the spraying machine 1 travels through each work passage, without straddling a crop row Vr1. In this case, the spraying device 4 performs a spraying work, while switching among a spray pattern in which a chemical solution is sprayed on both sides in the left-right direction D2, a spray pattern in which a chemical solution is sprayed only on the left side, and a spray pattern in which a chemical solution is sprayed only on the right side.

The antennas 21 and 22 are not limited to position-specific antennas, but may be, for example, antennas for wireless communication. Furthermore, the antennas 21 and 22 are not limited to antennas for receiving, but may be antennas for receiving and transmitting.

The user interface 61 may also have a means for presenting information to the user, for example, by audio output or the like, in addition to or instead of the display unit 611. Furthermore, at least one of adjustment items (such as a flow rate or a pressure) may be automatically adjusted by a control device with use of the operation unit 612 of the user interface 61. In this case, the operation unit 612 may be omitted as necessary, and the user interface 61 may only display an adjustment result on the display unit 611.

In the first embodiment, the spraying machine 1 is described as an example of a work machine, but the work machine is not limited to the spraying machine 1. For example, the work machine may be a picking machine. In this case, a picking unit that performs a picking work is an example of a work unit, and is supported by the support frame 3.

### (Second Embodiment)

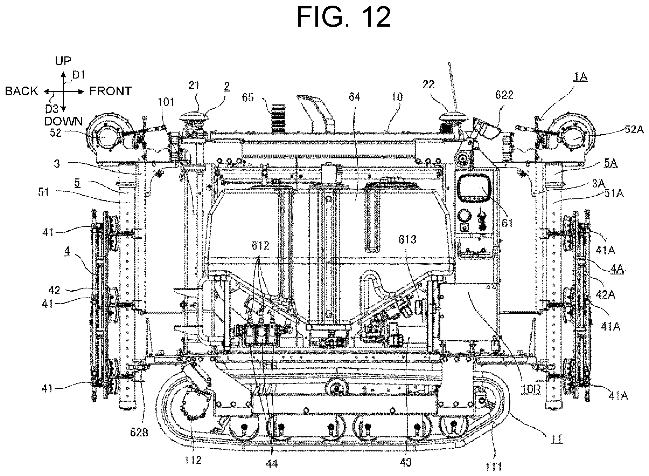

As illustrated in FIG. 12, a spraying machine 1A according to the present embodiment is different from the spraying machine 1 according to the first embodiment in a point that the spraying machine 1A further includes a second spraying portion 41A (second spraying unit) that is disposed to be aligned in a front-back direction D3 with respect to a spraying portion 41 (first spraying unit), and performs spraying of a spraying material (chemical solution). Hereinafter, a same component as that of the first embodiment is indicated with a common reference sign, and description thereof is omitted as necessary.

In the present embodiment, in addition to a support frame 3 (first support frame) provided on the rear side of a machine body 10, the spraying machine 1A includes a support frame 3A (second support frame) provided on the front side of the machine body 10. A spraying device 4A and an airflow generation unit 5A are supported by the support frame 3A. The spraying device 4A (second spraying device) is configured to be symmetrical with respect to the spraying device 4 (first spraying device) in the front-back direction D3. Similarly to the spraying device 4, the spraying device 4A includes the spraying portion 41A and a spraying pipe 42A. The airflow generation unit 5A (second airflow generation unit) is configured to be symmetrical with respect to an airflow generation unit 5 (first airflow generation unit) in the front-back direction D3, and includes a duct 51A and a blower 52A, similarly to the airflow generation unit 5.

In short, the spraying machine 1A includes a second work unit (spraying portion 41A) that is disposed to be aligned with a first work unit (spraying portion 41) being a work unit in the front-back direction D3, and performs a work (spraying work). Thus, each of the two spraying portions 41 and 41A aligned in the front-back direction D3 of the spraying machine 1A can perform a work (spraying work), thereby improving work efficiency compared to a case where work is performed by only one of the work units.

The support frame 3A, as well as the support frame 3, is supported by the machine body 10 to be rotatable around a rotation axis Ax1. Therefore, also in the spraying device 4A and the airflow generation unit 5A mounted on the support frame 3A, unevenness (uneven spraying) in the spraying amount of a spraying material (chemical solution) by the spraying portion 41A is less likely to occur by rotation of the support frame 3A when the machine body 10 is traveling on a slope with a transverse inclination.

As a modification example of the second embodiment, at least one of the support frames 3 and 3A aligned in the front-back direction D3 may be configured to be non-rotatable with respect to the machine body 10. For example, the support frame 3 is rotatably supported by the machine body 10, and the support frame 3A is fixedly supported by the machine body 10.

As another modification example of the second embodiment, a spraying portion (spraying device) may be provided in three or more stages in the front-back direction D3. For example, the spraying machine 1A may further include a spraying portion (third spraying unit) between the pair of spraying portions 41 and 41A in the front-back direction D3.

The configuration of the second embodiment can be employed in combination with various configurations (including modification examples) described in the first embodiment as necessary.

### (Third Embodiment)

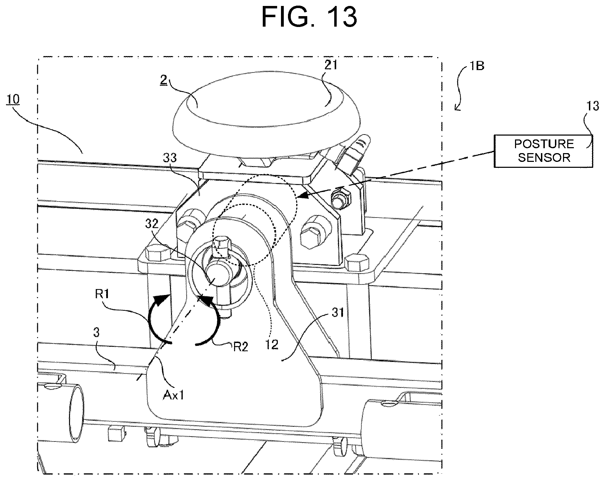

As illustrated in FIG. 13, a spraying machine 1B according to the present embodiment is different from the spraying machine 1 according to the first embodiment in a point that a rotation drive device 12 is provided. Hereinafter, the same component as that of the first embodiment is indicated with a common reference sign, and description thereof is omitted as necessary.

The rotation drive device 12 generates a rotational force that rotates a support frame 3 around a rotation axis Ax1 with respect to a machine body 10. In other words, the rotation drive device 12 is an actuator that actively rotates the support frame 3. Specifically, the rotation drive device 12 is a motor, a reduction gear, and the like provided on a bearing stand 33, and exerts a rotational force on a shaft pin 32. The rotation drive device 12 rotates the support frame 3 via the shaft pin 32, and stops the support frame 3 at any rotational angle. This makes it easier to control the support frame 3 at an intended rotational angle, compared to a configuration in which the support frame 3 rotates passively in response to an external force.

In the present embodiment, the rotation drive device 12 rotates the support frame 3 according to a posture of the machine body 10. In other words, as illustrated in FIG. 13, the spraying machine 1B includes a posture sensor 13 installed in the machine body 10, and a posture of the machine body 10 is monitored by the posture sensor 13. The posture sensor 13 is, for example, a gyro sensor, or the like, and monitors an inclination angle and the like of the machine body 10, as a posture of the machine body 10, when the machine body 10 is traveling on a slope with a transverse inclination. The rotation drive device 12 rotates and drives the support frame 3, based on a detection result of the posture sensor 13. As an example, in a case where an inclination angle of the field F1 is 5 degrees, and the machine body 10 is inclined to the right side by 5 degrees (see FIG. 11), the rotation drive device 12 rotates the support frame 3 in the second direction R2 by 5 degrees. This allows the support frame 3 to rotate at an appropriate rotational angle according to the posture of the machine body 10.

As a modification example of the third embodiment, the rotation drive device 12 may drive and rotate the support frame 3 regardless of a posture of the machine body 10. In this case, the posture sensor 13 can be omitted as necessary.

The configuration of the third embodiment can be employed in combination with various configurations (including modification examples) described in the first embodiment or the second embodiment as necessary.

### REFERENCE SIGNS LIST

1, 1A, 1B Spraying machine
3, 3A Support frame
3C Horizontal frame
3L, 3R Vertical frame
5, 5A Airflow generation unit
10 Machine body
11 Traveling unit
12 Rotation drive device
31 Fulcrum portion
41 spraying portion/first spraying unit
41A (Second) spraying portion/second spraying unit
51, 51A Duct
511 Blowhole
52, 52A Blower
Ax1 rotation axis
C1 Center
D1 Up-down direction
D2 Left-right direction
D3 Front-back direction
Sp1 Space
V1 Crop (object to be sprayed)

## Claims

1. A spraying machine comprising:
a machine body;
a support frame including a horizontal frame having a length along a left-right direction, and a pair of vertical frames each having a length along an up-down direction and protruding downward from both ends of the horizontal frame; and
a spraying unit that is supported by the support frame, and sprays a spraying material, wherein
the support frame is supported by the machine body to be rotatable around a rotation axis passing through a fulcrum portion provided on the horizontal frame and extending along a front-back direction, while maintaining a relative positional relationship between the pair of vertical frames and the horizontal frame.

2. The spraying machine according to claim 1, wherein
the fulcrum portion is disposed at an equidistant position of the horizontal frame from the pair of vertical frames.

3. The spraying machine according to claim 1 or 2, further comprising
an airflow generation unit that generates an airflow for conveying the spraying material to be discharged from the spraying unit.

4. The spraying machine according to claim 3, wherein
the airflow generation unit includes
a duct that forms a channel through which air flows along the up-down direction, and
a blower that causes the air to flow into the duct, and
the air blowing out through a blowout hole formed in the duct forms the airflow.

5. The spraying machine according to any one of claims 1 to 4, wherein
the machine body includes a traveling unit, and
the spraying unit is disposed at a position higher than a center of the traveling unit in the up-down direction.

6. The spraying machine according to any one of claims 1 to 5, further comprising
a rotation drive device that generates a rotational force for rotating the support frame around the rotational axis with respect to the machine body.

7. The spraying machine according to claim 6, wherein
the rotation drive device rotates the support frame according to a posture of the machine body.

8. The spraying machine according to any one of claims 1 to 7, wherein
the support frame forms, between the pair of vertical frames, a space for passing an object to be sprayed onto which the spraying material is sprayed.

9. The spraying machine according to any one of claims 1 to 8, further comprising
a second spraying unit that is disposed to be aligned in the front-back direction with respect to a first spraying unit being the spraying unit, and sprays the spraying material.
